# EUROPÄISCHE PATENTSCHRIFT

(11) **EP 4 335 626 B1**
(45) Veröffentlichungstag und Bekanntmachung des Hinweises auf die Patenterteilung: **18.11.2026**
(21) Anmeldenummer: 23179338.1
(22) Anmeldetag: 14.06.2023
(51) Int. Cl.: B29C 65/18, B29C 65/78, B29K 23/00

(54) **VORRICHTUNG ZUM VAKUUMVERSIEGELN**
VACUUM SEALING DEVICE
DISPOSITIF DE SCELLAGE SOUS VIDE

(30) Priorität: 09.08.2022 DE 102022120048
(43) Veröffentlichungstag der Anmeldung: 13.03.2024
(73) Patentinhaber: Acco UK Limited, Aylesbury Buckinghamshire HP21 8SZ (GB)
(72) Erfinder: Aries, Paul, West Midlands, DY5 3YF (GB); Patel, Kaush, Middlesex, HA6 1QJ (GB); Henderson, James, Hampshire, PO6 4TE (GB)
(74) Vertreter: Patentanwälte Bregenzer und Reule Partnerschaftsgesellschaft mbB

(56) Entgegenhaltungen:
- WO-A1-2019/013714
- DE-U1- 8 529 052
- US-A- 4 561 925
- US-A1- 2022 144 468

## Beschreibung

Die Erfindung betrifft eine Vorrichtung zum Vakuumversiegeln von Kunststoffhüllen gemäß Oberbegriff des Anspruchs 1.

Solche Kunststoffhüllen bestehen aus zwei Lagen transparenter Kunststofffolie, die an drei ihrer vier Seiten fest miteinander verbunden sind und an der vierten Seite eine Einschuböffnung freilassen. Durch die Einschuböffnung kann insbesondere ein Dokument zwischen die beiden Lagen der Kunststofffolie eingeschoben werden, bevor die Kunststoffhülle mittels einer solchen Versiegelungsvorrichtung luftdicht verschlossen wird, so dass das Dokument in der Kunststoffhülle vor äußeren Einflüssen geschützt aufbewahrt werden kann. Gegenüber einer Laminierung, bei der das Dokument zwischen zwei Kunststofffolien eingelegt wird, welche durch Erhitzen mit dem Dokument und miteinander verbunden werden, weist eine solche Vakuumversiegelung den Vorteil auf, dass das Dokument nicht stoffschlüssig mit den Kunststofffolien verbunden wird. Insbesondere kann die Kunststoffhülle später aufgetrennt werden, so dass das Dokument aus ihr wieder entnommen werden kann. In der Regel bestehen die zwei Lagen transparenter Kunststofffolie aus unterschiedlichen Materialien, wobei eine obere, eine beschriftete Seite des Dokuments bedeckende Lage eine möglichst hohe Transparenz und eine untere, die Rückseite des Dokuments bedeckende Lage eine möglichst hohe Steifigkeit aufweisen sollen. Diese Eigenschaften können durch geeignete Materialwahl erreicht werden oder aber beispielsweise durch Prägungen der unterseitigen Lage. Zudem ist es möglich, nur eine Kunststoffhülle in einem Arbeitsgang zu evakuieren und zu versiegeln. Im letzteren Fall liegen die Kunststoffhüllen flächig aufeinander. Dabei ist festzuhalten, dass sich die obigen Ausführungen sowohl auf vorbekannte Vorrichtungen und Verfahren zum Vakuumversiegeln von Kunststoffhüllen als auch auf die vorliegende Erfindung beziehen.

Bei vorbekannten Vorrichtungen zum Vakuumversiegeln besteht oft das Problem, dass nach Einlegen der mit einem Dokument bestückten Kunststoffhülle(n) in das Gehäuse und Schließen des Deckels, so dass die Vakuumkammer evakuiert werden kann, die exakte Positionierung der Kunststoffhülle bezüglich des Heizelements für den Benutzer nicht mehr sichtbar ist. Bei einer fehlerhaften Positionierung der Kunststoffhülle(n) im Gehäuse besteht aber die Gefahr, dass sich die Versiegelungslinie über das Dokument erstreckt, welches dann beim Vakuumversiegeln an einem Abschnitt der Versiegelungslinie stoffschlüssig mit der Kunststoffhülle verbunden wird, so dass es nicht mehr ohne Beschädigung aus der Kunststoffhülle entnommen werden kann. Eine Vorrichtung der eingangs genannte Art ist aus der US 2022/0144468 A1, der DE 85 29 052 U1, der US 4,561,925 A und der WO 2019/013714 A1 bekannt.

Es ist Aufgabe der Erfindung, eine Vorrichtung der eingangs genannten Art derart weiter zu entwickeln, dass einerseits ein zuverlässiges Versiegeln aller Kunststoffhüllen erreicht wird und andererseits ein unnötiges weiteres Aufschmelzen verhindert wird.

Diese Aufgabe wird erfindungsgemäß durch eine Vorrichtung mit den Merkmalen des Anspruchs 1 gelöst. Vorteilhafte Weiterbildungen der Erfindung sind Gegenstand der abhängigen Ansprüche.

Die Fixiereinrichtung dient dem lösbaren Fixieren der Kunststoffhüllen am Gehäuse. Der Erfindung liegt der Gedanke zugrunde, durch lösbares Fixieren der Kunststoffhüllen am Gehäuse mittels der Fixiereinrichtung eine möglichst exakte Positionierung der Kunststoffhüllen bezüglich des Heizelements zu ermöglichen. Diese erfindungsgemäße Lösung kann einerseits bei solchen Vorrichtungen angewandt werden, bei denen die Vakuumkammer groß genug ist, um die Kunststoffhüllen vollständig aufzunehmen. Sie kann jedoch auch besonders vorteilhaft dann angewandt werden, wenn das Gehäuse deutlich kleiner ausgeführt ist, so dass die Kunststoffhüllen jeweils teilweise und insbesondere auch größtenteils aus dem Gehäuse herausragen, wenn dieses geschlossen ist. Wenn die Kunststoffhüllen aus dem Gehäuse ragen, wird bevorzugt, dass sie nicht zu weit vom Unterteil herunterhängen, um Verformungen zu vermeiden. Aus diesem Grund wird bevorzugt, das Unterteil möglichst flach auszugestalten, also mit einer nur geringen Höhe gemessen von einer auf einem Boden aufliegenden Unterseite bis zur Oberseite, zu der die Vakuumkammer bei abgehobenem Deckel geöffnet ist. Das Gehäuse kann dabei vorteilhaft so gestaltet sein, dass die Vakuumkammer größtenteils oder vollständig im Deckel angeordnet ist. Sie kann grundsätzlich aber auch größtenteils oder vollständig im Unterteil angeordnet sein.

Es wird bevorzugt, dass die Fixiereinrichtung außerhalb der Vakuumkammer und vorzugsweise an einer der Vakuumkammer abgewandten Außenseite des Gehäuses angeordnet ist. Das Gehäuse kann dann klein bauen, wenn es nicht die Fixiereinrichtung aufnehmen muss. Andererseits wird bevorzugt, dass das Heizelement in der Vakuumkammer angeordnet ist.

Zweckmäßig ist ein Andrückelement zum Andrücken der Kunststoffhüllen an das Heizelement vorgesehen. Wenn das Heizelement im Unterteil angeordnet ist, ist das Andrückelement zweckmäßig ihm gegenüberliegend am Deckel angeordnet, wohingegen bei Anordnung des Heizelements im Deckel das Andrückelement zweckmäßig ihm gegenüberliegend am Unterteil angeordnet ist.

Die erfindungsgemäße Vorrichtung kann vorteilhaft ein Anschlagelement zum Anlegen einer Kante an der die Einschuböffnung aufweisenden vierten Seite (Einschubseite) der Kunststoffhülle aufweisen, wobei das Anschlagelement parallel und vorzugsweise im Abstand zum Heizelement verläuft. Diese Maßnahme erleichtert die Positionierung der Kunststoffhüllen bezüglich des Heizelements vor deren Fixierung am Gehäuse mittels der Fixiereinrichtung. Wenn das Anschlagelement parallel im Abstand zum Heizelement verläuft, wird auch die Kante an der Einschubseite durch Anlegen an das Anschlagelement so positioniert, dass sie parallel im Abstand zum Heizelement verläuft, so dass die Versiegelungslinie dann parallel im Abstand zur Kante der Einschubseite verläuft. Auch das Anschlagelement ist vorteilhaft in der Vakuumkammer angeordnet.

Zweckmäßig weist das Heizelement eine optische Markierung auf. Dabei kann es insbesondere mit einem farbigen Aufdruck oder mit einer farbigen Naht versehen sein. Die Positionierung der Kunststoffhüllen bezüglich des Heizelements ist dann aufgrund der Transparenz der Kunststoffhüllen leichter erkennbar. Um die Positionierung der Kunststoffhüllen bezüglich des Heizelements auch nach Schließen des Deckels und während der Evakuierung bzw. während der Versiegelung kontrollieren zu können, ist der Deckel gemäß einer vorteilhaften Weiterbildung der Erfindung zumindest in einem das Heizelement überdeckenden Bereich transparent. Alternativ oder ergänzend kann vorgesehen sein, dass der Deckel zumindest abschnittsweise bündig mit dem Heizelement abschließt. Auch letztere Maßnahme erleichtert die Überwachung, ob die Kunststoffhüllen bezüglich des Heizelements richtig positioniert sind.

Zweckmäßig ist im Gehäuse neben dem Heizelement mindestens ein optischer Sensor zur Messung eines Lichtdurchtritts durch die Kunststoffhüllen angeordnet. Diese Maßnahme berücksichtigt die Tatsache, dass zwar die Kunststoffhüllen weitgehend transparent sind, meist aber nicht die in den Kunststoffhüllen aufgenommenen Dokumente. Wird der Lichtdurchtritt durch die Kunststoffhüllen im Bereich des optischen Sensors unterbrochen, so ist dies ein Indiz dafür, dass ein in einer Kunststoffhülle aufgenommenes Dokument zu nah am Heizelement angeordnet ist.

Der Erfindung liegt der Gedanke zugrunde, durch eine Steuerung oder Regelung der Heizleistung des Heizelements in Abhängigkeit von der Dicke der am Heizelement anliegenden Kunststoffhülle(n) einerseits ein zuverlässiges Versiegeln aller Kunststoffhüllen zu erreichen, andererseits aber ein unnötiges weiteres Aufschmelzen der Kunststoffhülle(n) im Bereich des Heizelements zu verhindern. Die beiden Lagen der Kunststofffolie sind an ihren einander zugewandten Innenseiten meist mit Material mit niedrigerem

Schmelzpunkt, wie beispielsweise Polyethylen oder Polypropylen, beschichtet, während die einander abgewandten Außenseiten aus einem Material mit einem höheren Schmelzpunkt gefertigt sind. Dabei wird stets beabsichtigt, dass nur die Innenseiten entlang der Versiegelungslinie aufschmelzen und miteinander verschmelzen, nicht aber das Material an den Außenseiten, das dann am Gehäuse bzw. am Heizelement festkleben und die Vorrichtung beschädigen kann. Gemäß einer ersten Ausführungsform ist ein erster Temperatursensor zur Anlage an die Kunststoffhüllen an deren dem Heizelement abgewandten Seite vorgesehen, wobei die Steuer- oder Regeleinrichtung eingerichtet ist, das Heizelement auszuschalten, wenn die vom ersten Temperatursensor gemessene Temperatur einen vorgegebenen ersten Schwellwert überschreitet. Gemäß einer zweiten Ausführungsform ist ein zweiter Temperatursensor zur Anlage an die Kunststoffhüllen an deren dem Heizelement zugewandten Seite vorgesehen, wobei die Steuer- oder Regeleinrichtung eingerichtet ist, das Heizelement auszuschalten, wenn die vom zweiten Temperatursensor gemessene Temperatur einen vorgegebenen zweiten Schwellwert überschreitet. Beide Ausführungsformen können vorteilhaft miteinander kombiniert werden, wobei der zweite Schwellwert größer ist als der erste Schwellwert. Der erste Schwellwert ist dabei zweckmäßig mindestens so groß wie der Schmelzpunkt der innenseitigen Beschichtung der Kunststoffhüllen, während der zweite Schwellwert zweckmäßig höchstens so groß ist wie der Schmelzpunkt des die Außenseiten der Kunststoffhüllen bildenden Materials. Vorteilhaft weist das Heizelement einen Kaltleiter auf, dessen elektrischer Widerstrand sprunghaft ansteigt, wenn seine Temperatur den zweiten Schwellwert erreicht. Alternativ oder ergänzend zur Verwendung von einem oder zwei Temperatursensoren kann die Steuer- oder Regeleinrichtung eingerichtet sein, das Heizelement nach Ablauf einer vorbestimmten Heizdauer auszuschalten. Die vorbestimmte Heizdauer kann vom Benutzer manuell in Abhängigkeit von der Anzahl der in das Gehäuse eingelegten Kunststoffhüllen vorgegeben werden.

Um die Dauer des Evakuiervorgangs möglichst gering zu halten, wird bevorzugt, dass die Vakuumkammer ein geringes Volumen aufweist, insbesondere ein Volumen von höchstens 20 cm³, vorzugsweise von höchstens 10 cm³ und idealerweise von höchstens 5 cm³. Dabei ist es auch möglich, dass das Volumen der Vakuumkammer variierbar ist, um es an unterschiedliche Anwendungsgebiete anzupassen. Beispielsweise können Einsatzelemente vorgesehen sein, die in die Vakuumkammer eingesetzt werden, um deren Volumen zu reduzieren, und die zur Volumenvergrößerung wieder aus der Vakuumkammer entnommen werden können.

Zweckmäßig ist ein Drucksensor zur Messung des Drucks in der Vakuumkammer vorgesehen. Dabei kann die Steuer- oder Regeleinrichtung eingerichtet sein, das Heizelement einzuschalten, wenn der vom Drucksensor gemessene Druck einen Drucksollwert erreicht oder unterschreitet. Durch die Maßnahme wird das Einschalten des Heizelements automatisiert. Zudem wird vermieden, dass das Heizelement eingeschaltet wird, bevor der Evakuierungsvorgang hinreichend fortgeschritten ist.

Vorteilhaft kann zudem eine Einführhilfe zum Einführen von Dokumenten in die Kunststoffhüllen vorgesehen sein. Dokumente aus gewöhnlichem Papier weisen oft keine hinreichende Steifigkeit auf, um sie auf einfache Weise in die Kunststoffhüllen einführen zu können. Oftmals knicken solche Dokumente beim Einführen. Zu diesem Zweck weist die Einführhilfe ein oder zwei Flachmaterialstücke auf, die jeweils eine höhere Steifigkeit aufweisen als die Dokumente, und die zweckmäßig aus Karton oder Kunststoff gefertigt sind. Jedes der Flachmaterialstücke ist deckungsgleich mit den Dokumenten mit Ausnahme einer randoffenen Ausnehmung in dem Sinne, dass es mit Ausnahme des Bereichs der randoffenen Ausnehmung das Dokument vollständig bedeckt und höchstens einige Millimeter über dessen Ränder übersteht. Zum Einführen eines Dokuments in eine Kunststoffhülle wird das Dokument an das Flachmaterialstück angelegt oder zwischen die Flachmaterialstücke eingelegt, und dieses bzw. diese wird bzw. werden mit dem Dokument mit der/den randoffenen Ausnehmung(en) voran durch die Einschuböffnung in die Kunststoffhülle eingeführt. Wenn das bzw. die Flachmaterialstück(e) mit dem Dokument vollständig in die Kunststoffhülle eingeführt ist bzw. sind, wird das Dokument durch Zusammendrücken der beiden Lagen der Kunststofffolie im Bereich der randoffenen Ausnehmung(en) festgehalten, und das bzw. die Flachmaterialstück(e) wird bzw. werden aus der Kunststoffhülle herausgezogen. Schließlich wird die Kunststoffhülle mit dem in ihr aufgenommenen Dokument mittels der Fixiereinrichtung am Gehäuse fixiert, mittels der Vakuumpumpe zusammen mit der Vakuumkammer evakuiert und durch Aufschmelzen entlang der Versiegelungslinie mittels des Heizelements versiegelt.

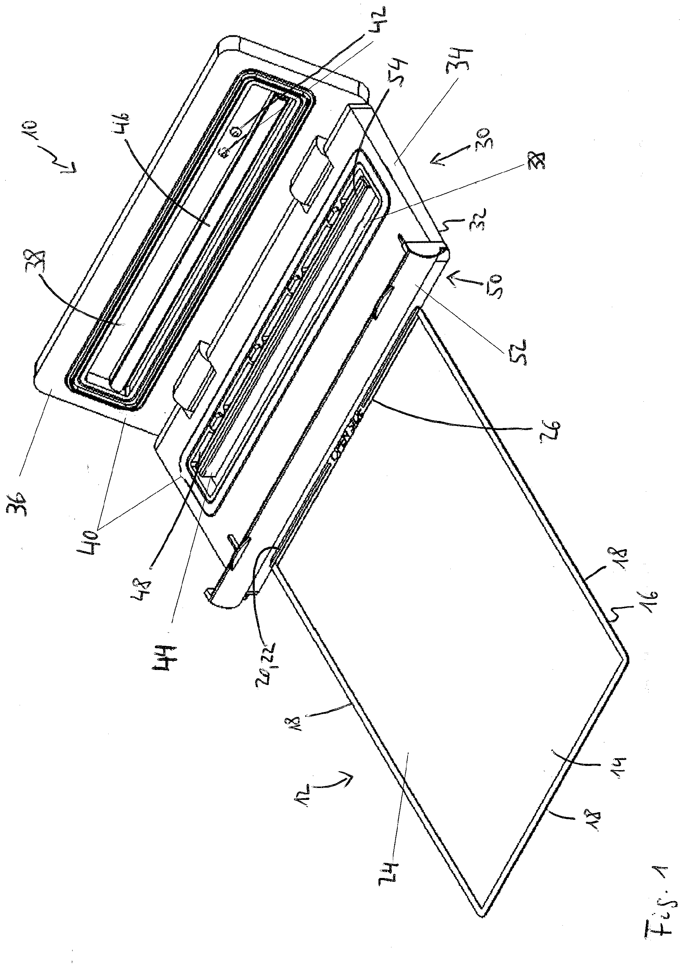

Im Folgenden wird die Erfindung anhand eines in der Zeichnung schematisch dargestellten Ausführungsbeispiels näher erläutert. Es zeigen
- Fig. 1: eine Vorrichtung zum Vakuumversiegeln von Kunststoffhüllen in geöffnetem Zustand zusammen mit einer Kunststoffhülle in perspektivischer Ansicht;

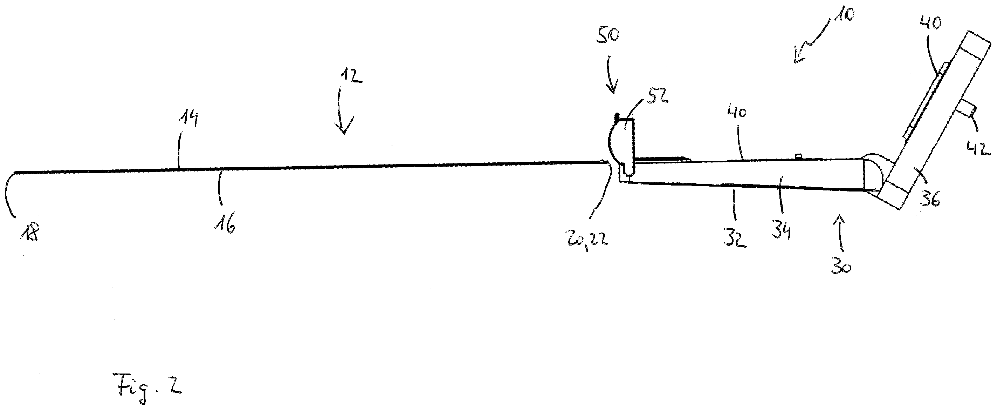

- Fig. 2: die Vorrichtung gemäß Fig. 1 in Seitenansicht;

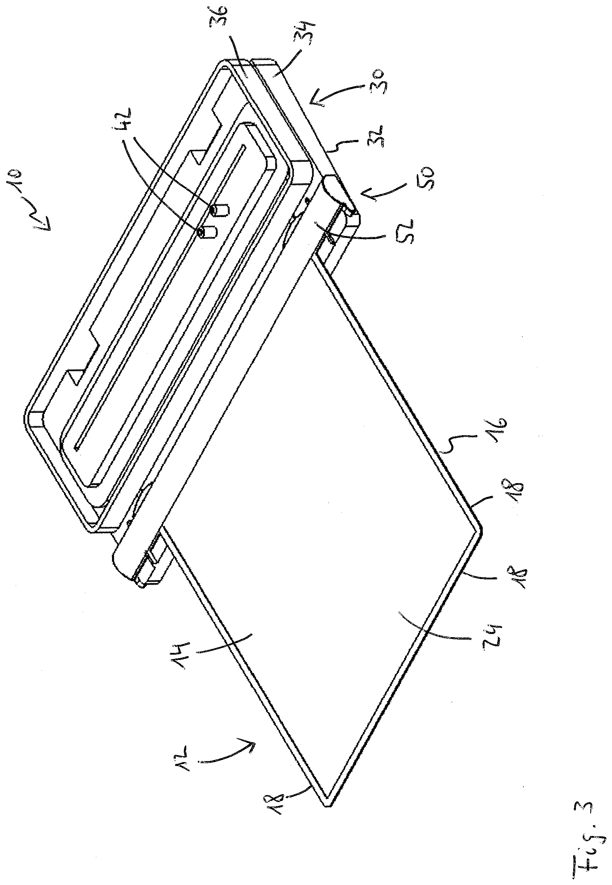

- Fig. 3: die Vorrichtung gemäß Fig. 1 in geschlossenem Zustand mit eingelegter Kunststoffhülle in perspektivischer Ansicht;

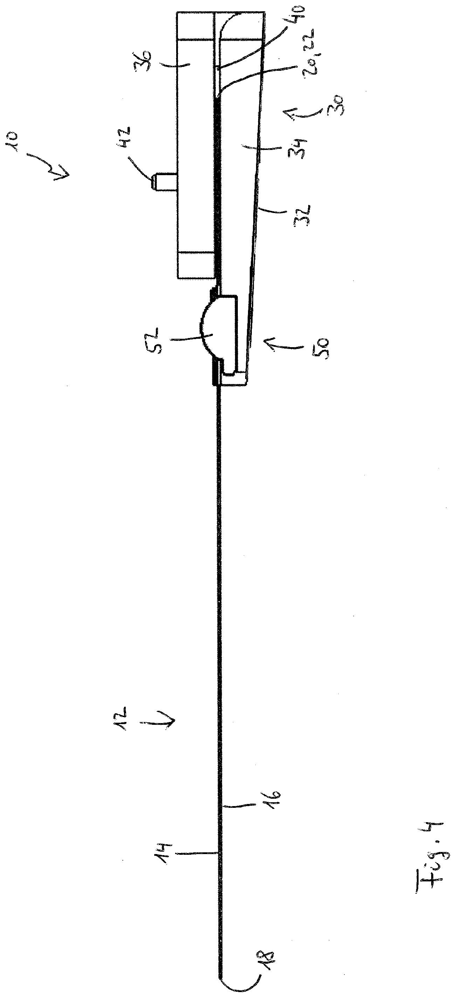

- Fig. 4: die Vorrichtung gemäß Fig. 3 in Seitenansicht und
- Fig. 5: eine Einführhilfe.

Die in der Zeichnung dargestellte Vorrichtung 10 dient dem Vakkumversiegeln von Kunststoffhüllen 12, wobei die Kunststoffhüllen 12 jeweils zwei Lagen 14, 16 aus transparenter Kunststofffolie aufweisen, die an drei ihrer vier Seiten 18 fest miteinander verbunden sind und an der vierten Seite 20, an der Einschubseite, eine Einschuböffnung 22 freilassen. Durch die Einschuböffnung 22 wird vor dem Vakkumversiegeln ein Dokument 24 in die Kunststoffhülle 12 eingeschoben, das luftdicht in der Kunststoffhülle 12 versiegelt aufbewahrt werden soll. Zu diesem Zweck wird die Kunststoffhülle 12 mittels der Vorrichtung 10 entlang einer Versiegelungslinie 26 lokal aufgeschmolzen, so dass sich die beiden Folienlagen 14, 16 nach dem Abkühlen entlang der Versiegelungslinie 26 verbinden und das Dokument 24 luftdicht abgeschlossen in der Kunststoffhülle 12 aufgenommen ist. Zu diesem Zweck sind die Folienlagen 14, 16 jeweils an ihren einander zugewandten Innenseiten mit einem niedrig schmelzenden Material, wie beispielsweise Polyethylen oder Polypropylen, beschichtet. Die einander abgewandten Außenseiten der Folienlagen 14, 16 sind jeweils aus einem höher schmelzenden Material gefertigt, wobei die obere Folienlage 14, der die beschriftete Seite des Dokuments 24 zugewandt ist, aus einem möglichst transparenten Material besteht, während die untere Folienlage 16 ebenfalls transparent ist, aber vor allem steifer ausgebildet ist, beispielsweise durch geeignete Materialwahl oder durch Prägungen.

Die Vorrichtung 10 weist ein Gehäuse 30 auf mit einem eine unterseitige Aufstellfläche 32 zum Aufstellen auf beispielsweise einen Tisch aufweisenden Unterteil 34 und einem vom Unterteil 34 abnehmbaren Deckel 36, der im gezeigten Ausführungsbeispiel verschwenkbar am Unterteil 34 angelenkt ist. Das Unterteil 34 und der Deckel 36 begrenzen gemeinsam eine Vakuumkammer 38, die sich teilweise in das Unterteil 34 und teilweise in den Deckel 36 erstreckt. Umlaufende Dichtungen 40 am Unterteil 34 sowie am Deckel 36 dichten die Vakuumkammer 38 gegenüber der Umgebung ab, so dass sie mittels einer nicht näher dargestellten Vakuumpumpe durch Entlüftungsöffnungen 42 evakuiert werden kann. Zum Aufschmelzen der Folienlagen 14, 16 ist in der Vakuumkammer 38 im Unterteil 34 ein Heizelement 44 angeordnet, während im Deckel 36 ein Andrückelement 46 angeordnet ist, das die Folienlagen 14, 16 auf das Heizelement 44 drückt, wenn das Gehäuse 30 geschlossen ist.

Um die Kunststoffhülle 12 vor dem Schließen des Gehäuses 30 richtig bezüglich des Heizelements 44 positionieren zu können, ist ein Anschlagelement 48 an einer Begrenzungswand der Vakuumkammer 38 angeordnet, an das die Einschubseite 20 der Kunststoffhülle 12 angelegt wird. Um zu vermeiden, dass die Kunststoffhülle 12 beim Schließen des Gehäuses 30 sich aus dieser Position herausbewegt, ist am Gehäuse 30 außerhalb der Vakuumkammer 38 eine Fixiereinrichtung 50 angeordnet, die dem lösbaren Fixieren der Kuststoffhülle 12 am Gehäuse 30 dient und die ein am Unterteil 34 angelenktes Klemmelement 52 aufweist. Die Kunststoffhülle 12 wird beim Einführen in das Gehäuse 30 unter dem Klemmelement 52 durchgeführt. Wenn sie mit der Einschubseite 20 am Anschlagelement 48 anliegt, wird das Klemmelement 52 gegenüber dem Unterteil 34 verschwenkt, so dass die Kunststoffhülle 12 zwischen dem Klemmelement 52 und dem Unterteil 34 eingeklemmt wird. Dann wird das Gehäuse durch Herunterklappen des Deckels 36 auf das Unterteil 34 geschlossen, die Vakuumkammer 38 wird mittels der Vakuumpumpe evakuiert, so dass auch die Kunststoffhülle 12 evakuiert wird, und nach Abschluss des Evakuierens wird die Kunststoffhülle 12 entlang der Versiegelungslinie 26 mittels des Heizelements 44 aufgeschmolzen. Das Heizelement 44 weist zudem eine durch die Kunststoffhülle 12 hindurch sichtbare optische Markierung 54 in Form eines Farbstreifens auf, die ebenfalls erkennen lässt, ob die Kunststoffhülle 12 bezüglich des Heizelements 44 richtig positioniert ist. Zudem kann in der Vakuumkammer 38 ein optischer Sensor vorgesehen sein, der direkt neben dem Heizelement 44 angeordnet ist und den Lichtdurchtritt durch die Kunststoffhülle 12 misst. Wenn der optische Sensor keinen Lichtdurchtritt misst, da dieser durch das Dokument 24 verhindert wird, ist dies ein Zeichen dafür, dass sich das Dokument 24 zu nah am Heizelement 44 befindet.

Die Vorrichtung 10 weist zudem eine nicht im Detail dargestellte Steuer- oder Regeleinrichtung zur Steuerung oder Regelung der Heizleistung des Heizelements 44 auf. Im Deckel 36 ist ein nicht im Detail dargestellter erster Temperatursensor zur Anlage an die obere Folienlage 14 angeordnet, während im Unterteil 34 nahe dem Heizelement 44 ein ebenfalls nicht im Detail dargestellter zweiter Temperartursensor zur Anlage an die untere Folienlage 16 angeordnet ist. Prinzipiell ist es möglich, mit der gezeigten Vorrichtung 10 in einem Arbeitsgang nur eine Kunststoffhülle 12 zu versiegeln. Es ist jedoch auch möglich, in einem Arbeitsgang gleichzeitig zwei oder noch mehr Kunststoffhüllen 12 übereinander liegend gleichzeitig zu versiegeln. In diesem Fall ist die Steuerung oder Regelung der Heizleistung des Heizelements 44 besonders vorteilhaft, da bei zu geringem Wärmeeintrag eine Versiegelung der untersten Kunststoffhülle 12 gegebenenfalls noch erfolgreich ist, während die oberste Kunststoffhülle 12 aber nicht mehr hinreichend versiegelt wird, während bei einem zu großen Wärmeeintrag zwar eine Versiegelung aller Kunststoffhüllen 12 stattfindet, diese aber auch an ihren Außenseiten in ungewünschter Weise aufgeschmolzen werden. Die Steuer- oder Regeleinrichtung ist dabei eingerichtet, das Heizelement 44 auszuschalten, wenn die vom ersten Temperatursensor gemessene Temperatur einen vorgegebenen ersten Schwellwert überschreitet, welcher höchstens der Temperatur entspricht, bei der die Kunststoffhüllen 12 an ihrer Außenseite schmelzen. Die Steuer- oder Regeleinrichtung ist zudem eingerichtet, das Heizelement auszuschalten, wenn die vom zweiten Temperatursensor gemessene Temperatur einen vorgegebenen zweiten Schwellwert überschreitet, welcher dem Schmelzpunkt der Beschichtung der Folienlagen 14, 16 an ihren Innenseiten entspricht.

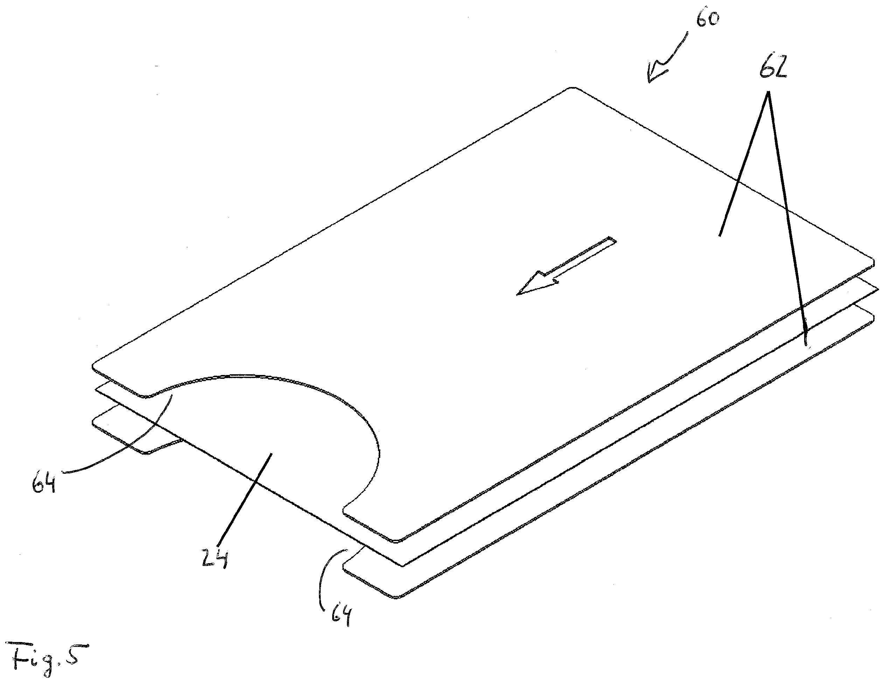

Um ein Einführen des Dokuments 24 in die Kunststoffhülle 12 zu erleichtern, ist zudem eine Einführhilfe 60 vorgesehen, wie in Fig. 5 dargestellt. Die Einführhilfe 60 weist zwei Flachmaterialstücke 62 aus einem Material auf, das steifer ist als das Material des Dokuments 24, beispielsweise aus Karton oder Kunststoff. Die Flachmaterialstücke 62 sind im Wesentlichen deckungsgleich mit dem Dokument 24, welches im gezeigten Ausführungsbeispiel das Format DIN A4 hat, mit Ausnahme jeweils einer randoffenen Ausnehmung 64. Das Dokument wird zwischen die Flachmaterialstücke 62 eingelegt, so dass diese es beidseitig vollständig überdecken mit Ausnahme des Bereichs der randoffenen Ausnehmungen 64. Die Einführhilfe 60 wird dann zusammen mit dem Dokument 24 in Pfeilrichtung mit den randoffenen Ausnehmungen 64 voran in die Kunststoffhülle 12 eingeschoben, bis sich das Dokument 24 vollständig in der Kunststoffhülle 12 befindet. Dann wird das Dokument durch beidseitige Beaufschlagung der Kunststoffhülle 12 im Bereich der randoffenen Ausnehmungen 64 festgehalten, und die Flachmaterialstücke 62 werden aus der Kunststoffhülle 12 herausgezogen. In Fig. 5 sind die randoffenen Ausnehmungen 64 jeweils an der Schmalseite der Flachmaterialstücke 62 angeordnet. Es versteht sich aber von selbst, dass sie auch an der Längsseite angeordnet sein können, wenn das Dokument 24 mit seiner Längsseite voran in die Kunststoffhülle 12 eingeschoben werden soll. In letzterem Fall ist die Einschuböffnung 22 selbstverständlich an einer der Längsseiten der Kunststoffhülle 12 angeordnet.

In der Vakuumkammer 38 kann zudem ein in der Zeichnung nicht im Detail dargestellter Drucksensor angeordnet sein, der den Druck in der Vakuumkammer misst. Dabei kann die Steuer- oder Regeleinrichtung eingerichtet sein, das Heizelement 44 einzuschalten, wenn der vom Drucksensor gemessene Druck einen Drucksollwert erreicht oder unterschreitet.

Zusammenfassend ist folgendes festzuhalten: Die Erfindung betrifft eine Vorrichtung 10 zum Vakuumversiegeln von Kunststoffhüllen 12 aus zwei Lagen 14, 16 transparenter Kunststofffolie, die an drei ihrer vier Seiten 18 fest miteinander verbunden sind und an der vierten Seite 20 eine Einschuböffnung 22 freilassen, mit einem Gehäuse 30, das ein Unterteil 34 und einen vom Unterteil 34 abnehmbaren Deckel 36 aufweist, wobei zwischen dem Unterteil 34 und dem Deckel 36 eine Vakuumkammer 38 angeordnet ist, mit einer Vakuumpumpe zur Evakuierung der Vakuumkammer 38 und mit einem Heizelement 44 zum Aufschmelzen der Kunststoffhüllen 12 entlang einer Versiegelungslinie 26 an der vierten Seite 20. Erfindungsgemäß ist vorgesehen, dass am Gehäuse 30 eine Fixiereinrichtung 50 zum lösbaren Fixieren der Kunststoffhüllen 12 am Gehäuse 30 angeordnet ist.

## Patentansprüche

1. Vorrichtung zum Vakuumversiegeln von Kunststoffhüllen (12) aus zwei Lagen (14, 16) transparenter Kunststofffolie, die an drei ihrer vier Seiten (18) fest miteinander verbunden sind und an der vierten Seite (20) eine Einschuböffnung (22) freilassen, mit einem Gehäuse (30), das ein Unterteil (34) und einen vom Unterteil (34) abnehmbaren Deckel (36) aufweist, wobei zwischen dem Unterteil (34) und dem Deckel (36) eine Vakuumkammer (38) angeordnet ist, mit einer Vakuumpumpe zur Evakuierung der Vakuumkammer (38) und mit einem Heizelement (44) zum Aufschmelzen der Kunststoffhüllen (12) entlang einer Versiegelungslinie (26) an der vierten Seite (20), wobei am Gehäuse (30) eine Fixiereinrichtung (50) zum lösbaren Fixieren der Kunststoffhüllen (12) am Gehäuse (30) angeordnet ist, **gekennzeichnet durch** eine Steuer- oder Regeleinrichtung zur Steuerung oder Regelung der Heizleistung des Heizelements (44) in Abhängigkeit von der Dicke der am Heizelement (44) anliegenden Kunststoffhülle(n) (12).

2. Vorrichtung nach Anspruch 1, **dadurch gekennzeichnet, dass** die Fixiereinrichtung (50) außerhalb der Vakuumkammer (38) und vorzugsweise an einer der Vakuumkammer (38) abgewandten Außenseite des Gehäuses (30) angeordnet ist.

3. Vorrichtung nach Anspruch 1 oder 2, **dadurch gekennzeichnet, dass** das Heizelement (44) in der Vakuumkammer (38) angeordnet ist.

4. Vorrichtung nach Anspruch 3, **gekennzeichnet durch** ein Andrückelement (46) zum Andrücken der Kunststoffhüllen an das Heizelement (44).

5. Vorrichtung nach einem der vorangehenden Ansprüche, **gekennzeichnet durch** ein Anschlagelement (48) zum Anlegen einer Kante an der vierten Seite (20) der Kunststoffhülle (12), das parallel und vorzugsweise im Abstand zum Heizelement (44) verläuft.

6. Vorrichtung nach Anspruch 5, **dadurch gekennzeichnet, dass** das Anschlagelement (48) in der Vakuumkammer (38) angeordnet ist.

7. Vorrichtung nach einem der vorangehenden Ansprüche, **dadurch gekennzeichnet, dass** das Heizelement (44) eine optische Markierung (54) aufweist und insbesondere mit einem farbigen Aufdruck oder mit einer farbigen Naht versehen ist.

8. Vorrichtung nach einem der vorangehenden Ansprüche, **dadurch gekennzeichnet, dass** der Deckel (36) zumindest in einem das Heizelement (44) überdeckenden Bereich transparent ist.

9. Vorrichtung nach einem der vorangehenden Ansprüche, **dadurch gekennzeichnet, dass** der Deckel (36) zumindest abschnittsweise bündig mit dem Heizelement (44) abschließt.

10. Vorrichtung nach einem der vorangehenden Ansprüche, **dadurch gekennzeichnet, dass** im Gehäuse (30) neben dem Heizelement (44) mindestens ein optischer Sensor zur Messung eines Lichtdurchtritts durch die Kunststoffhüllen (12) angeordnet ist.

11. Vorrichtung nach einem der vorangehenden Ansprüche, **gekennzeichnet durch** einen ersten Temperatursensor zur Anlage an die Kunststoffhüllen (12) an deren dem Heizelement (44) abgewandten Seite, wobei die Steuer- oder Regeleinrichtung eingerichtet ist, das Heizelement (44) auszuschalten, wenn die vom ersten Temperatursensor gemessene Temperatur einen vorgegebenen ersten Schwellwert überschreitet, wobei der erste Schwellwert mindestens der Temperatur entspricht, bei der die Kunststoffhüllen (12) an ihrer Innenseite unter Bildung der Versiegelungslinie (26) schmelzen.

12. Vorrichtung nach Anspruch 11, **gekennzeichnet durch** einen zweiten Temperatursensor zur Anlage an die Kunststoffhüllen (12) an deren dem Heizelement (44) zugewandten Seite, wobei die Steuer- oder Regeleinrichtung eingerichtet ist, das Heizelement (44) auszuschalten, wenn die vom zweiten Temperatursensor gemessene Temperatur einen vorgegebenen zweiten Schwellwert überschreitet, wobei der zweite Schwellwert größer ist als der erste Schwellwert und wobei der zweite Schwellwert höchstens der Temperatur entspricht, bei der die Kunststoffhüllen (12) an ihrer Außenseite schmelzen.

13. Vorrichtung nach einem der vorangehenden Ansprüche, **gekennzeichnet durch** eine Einführhilfe (60) zum Einführen von Dokumenten (24) in die Kunststoffhüllen (12) mit einem oder zwei Flachmaterialstücken (62), die jeweils eine höhere Steifigkeit aufweisen als die Dokumente (24), wobei jedes der Flachmaterialstücke (62) deckungsgleich mit den Dokumenten (24) ist mit Ausnahme einer randoffenen Ausnehmung (64).

14. Verfahren zum vakuumversiegelten Einschließen eines Dokuments (24) in einer Kunststoffhülle (12) mittels einer Vorrichtung (10) zum Vakuumversiegeln mit einem Gehäuse (30), das ein Unterteil (34) und einen vom Unterteil (34) abnehmbaren Deckel (36) aufweist, wobei zwischen dem Unterteil (34) und dem Deckel (36) eine Vakuumkammer (38) angeordnet ist, und mit einer Vakuumpumpe zur Evakuierung der Vakuumkammer (38), wobei am Gehäuse (30) eine Fixiereinrichtung (50) zum lösbaren Fixieren der Kunststoffhüllen (12) am Gehäuse (30) angeordnet ist, wobei die Vorrichtung (10) zum Vakuumversiegeln eine Einführhilfe (60) zum Einführen von Dokumenten (24) in die Kunststoffhüllen (12) mit einem oder zwei Flachmaterialstücken (62) aufweist, die jeweils eine höhere Steifigkeit aufweisen als die Dokumente (24), wobei jedes der Flachmaterialstücke (62) deckungsgleich mit den Dokumenten (24) ist mit Ausnahme einer randoffenen Ausnehmung (64), wobei die Kunststoffhülle (12) zwei Lagen (14, 16) transparenter Kunststofffolie aufweist, die an drei ihrer vier Seiten (18) fest miteinander verbunden sind und an der vierten Seite (20) eine Einschuböffnung (22) freilassen, wobei die Vorrichtung (10) zum Vakuumversiegeln ein Heizelement (44) zum Aufschmelzen der Kunststoffhüllen (12) entlang einer Versiegelungslinie (26) an der vierten Seite (20) aufweist, wobei das Dokument (24) an ein Flachmaterialstück (62) bzw. zwischen die Flachmaterialstücke (62) der Einführhilfe (60) angelegt bzw. eingelegt wird, wobei das bzw. die Flachmaterialstück(e) (62) mit dem Dokument (24) mit den randoffenen Ausnehmungen (64) voran durch die Einschuböffnung (22) in die Kunststoffhülle (12) eingeführt wird bzw. werden, wobei das bzw. die Flachmaterialstück(e) (62) aus der Kunststoffhülle (12) herausgezogen wird bzw. werden, während das Dokument (24) im Bereich der randoffenen Ausnehmungen (64) festgehalten wird, und wobei die Kunststoffhülle (12) mittels der Fixiereinrichtung (50) am Gehäuse (30) fixiert, evakuiert und durch Aufschmelzen entlang der Versiegelungslinie (26) versiegelt wird.

## Claims

1. Apparatus for vacuum sealing plastics pouches (12) consisting of two layers (14, 16) of transparent plastics film, which are fixedly connected to one another on three of their four sides (18) and, on the fourth side (20), leave an insertion opening (22) free, having a housing (30), which has a lower part (34) and a cover (36) that can be removed from the lower part (34), wherein a vacuum chamber (38) is arranged between the lower part (34) and the cover (36), having a vacuum pump for evacuating the vacuum chamber (38), and having a heating element (44) for fusing the plastics pouches (12) along a sealing line (26) on the fourth side (20), wherein a fixing device (50) for releasably fixing the plastics pouches (12) to the housing (30) is arranged on the housing (30), **characterized by** a control or regulating device for controlling or regulating the heating power of the heating element (44) depending on the thickness of the plastics pouch(es) (12) resting against the heating element (44).

2. Apparatus according to Claim 1, **characterized in that** the fixing device (50) is arranged outside the vacuum chamber (38) and preferably on an outer side of the housing (30) that faces away from the vacuum chamber (38).

3. Apparatus according to Claim 1 or 2, **characterized in that** the heating element (44) is arranged in the vacuum chamber (38).

4. Apparatus according to Claim 3, **characterized by** a pressing element (46) for pressing the plastics pouches onto the heating element (44).

5. Apparatus according to any of the preceding claims, **characterized by** a stop element (48) that is intended to be placed against an edge on the fourth side (20) of the plastics pouch (12) and runs parallel to and preferably at a distance from the heating element (44).

6. Apparatus according to Claim 5, **characterized in that** the stop element (48) is arranged in the vacuum chamber (38).

7. Apparatus according to any of the preceding claims, **characterized in that** the heating element (44) has an optical marking (54) and in particular is provided with a coloured imprint or with a coloured seam.

8. Apparatus according to any of the preceding claims, **characterized in that** the cover (36) is transparent at least in a region overlapping the heating element (44).

9. Apparatus according to any of the preceding claims, **characterized in that** at least certain portions of the cover (36) end flush with the heating element (44).

10. Apparatus according to any of the preceding claims, **characterized in that** at least one optical sensor for measuring light transmission through the plastics pouches (12) is arranged next to the heating element (44) in the housing (30).

11. Apparatus according to any of the preceding claims, **characterized by** a first temperature sensor for placing against the plastics pouches (12) on their side facing away from the heating element (44), wherein the control or regulating device is designed to switch off the heating element (44) if the temperature measured by the first temperature sensor exceeds a predetermined first threshold value, wherein the first threshold value corresponds at least to the temperature at which the plastics pouches (12) melt on their inner side, forming the sealing line (26).

12. Apparatus according to Claim 11, **characterized by** a second temperature sensor for placing against the plastics pouches (12) on their side facing the heating element (44), wherein the control or regulating device is designed to switch off the heating element (44) if the temperature measured by the second temperature sensor exceeds a predetermined second threshold value, wherein the second threshold value is greater than the first threshold value and wherein the second threshold value corresponds at most to the temperature at which the plastics pouches (12) melt on their outer side.

13. Apparatus according to any of the preceding claims, **characterized by** an introducing aid (60) that is intended for introducing documents (24) into the plastics pouches (12) and has one or two pieces of flat material (62), each of which is more rigid than the documents (24), wherein each of the pieces of flat material (62) is congruent with the documents (24), with the exception of a recess (64) that is open at the edge.

14. Method for enclosing a document (24) in a plastics pouch (12) in a vacuum-sealed manner by means of a vacuum sealing apparatus (10) having a housing (30), which has a lower part (34) and a cover (36) that can be removed from the lower part (34), wherein a vacuum chamber (38) is arranged between the lower part (34) and the cover (36), and having a vacuum pump for evacuating the vacuum chamber (38), wherein a fixing device (50) for releasably fixing the plastics pouches (12) to the housing (30) is arranged on the housing (30), wherein the vacuum sealing apparatus (10) has an introducing aid (60) that is intended for introducing documents (24) into the plastics pouches (12) and has one or two pieces of flat material (62), each of which is more rigid than the documents (24), wherein each of the pieces of flat material (62) is congruent with the documents (24), with the exception of a recess (64) that is open at the edge, wherein the plastics pouch (12) has two layers (14, 16) of transparent plastics film, which are fixedly connected to one another on three of their four sides (18) and, on the fourth side (20), leave an insertion opening (22) free, wherein the vacuum sealing apparatus (10) has a heating element (44) for fusing the plastics pouches (12) along a sealing line (26) on the fourth side (20), wherein the document (24) is placed against a piece of flat material (62) or inserted between the pieces of flat material (62) of the introducing aid (60), wherein the piece(s) of flat material (62) is/are introduced, with the document (24), with the recesses (64) that are open at the edge in front, through the insertion opening (22) into the plastics pouch (12), wherein the piece(s) of flat material (62) is/are pulled out of the plastics pouch (12) while the document (24) is firmly held in the region of the recesses (64) that are open at the edge, and wherein the plastics pouch (12) is fixed to the housing (30) by means of the fixing device (50), evacuated and sealed by fusing along the sealing line (26).

## Revendications

1. Dispositif de scellage sous vide d'enveloppes en matière plastique (12) constituées de deux couches (14, 16) de film en matière plastique transparent, lesquelles sont reliées solidement l'une à l'autre sur trois de leurs quatre côtés (18) et laissent libre une ouverture d'insertion (22) sur le quatrième côté (20), comportant un boîtier (30) qui présente une partie inférieure (34) et un couvercle (36) détachable de la partie inférieure (34), dans lequel une chambre à vide (38) est disposée entre la partie inférieure (34) et le couvercle (36), comportant une pompe à vide permettant de faire le vide dans la chambre à vide (38) et comportant un élément chauffant (44) permettant de faire fondre les enveloppes en matière plastique (12) le long d'une ligne de scellage (26) sur le quatrième côté (20), dans lequel un dispositif de fixation (50) permettant de fixer de manière amovible les enveloppes en matière plastique (12) au niveau du boîtier (30) est disposé sur le boîtier (30), **caractérisé par** un dispositif de commande ou de régulation permettant de commander ou réguler la puissance de chauffage de l'élément chauffant (44) en fonction de l'épaisseur de l'enveloppe en matière plastique ou des enveloppes en matière plastique (12) en appui contre l'élément chauffant (44).

2. Dispositif selon la revendication 1, **caractérisé en ce que** le dispositif de fixation (50) est disposé à l'extérieur de la chambre à vide (38) et de préférence sur un côté extérieur du boîtier (30) opposé à la chambre à vide (38).

3. Dispositif selon la revendication 1 ou 2, **caractérisé en ce que** l'élément chauffant (44) est disposé dans la chambre à vide (38).

4. Dispositif selon la revendication 3, **caractérisé par** un élément de pression (46) pour presser les enveloppes en matière plastique contre l'élément chauffant (44).

5. Dispositif selon l'une quelconque des revendications précédentes, **caractérisé par** un élément de butée (48) pour appliquer contre un bord au quatrième côté (20) de l'enveloppe en matière plastique (12), lequel élément de butée s'étend parallèlement à l'élément chauffant (44) et de préférence à distance de celui-ci.

6. Dispositif selon la revendication 5, **caractérisé en ce que** l'élément de butée (48) est disposé dans la chambre à vide (38).

7. Dispositif selon l'une quelconque des revendications précédentes, **caractérisé en ce que** l'élément chauffant (44) présente une marque optique (54) et est en particulier pourvu d'une impression colorée ou d'un joint coloré.

8. Dispositif selon l'une quelconque des revendications précédentes, **caractérisé en ce que** le couvercle (36) est transparent au moins dans une région recouvrant l'élément chauffant (44).

9. Dispositif selon l'une quelconque des revendications précédentes, **caractérisé en ce que** le couvercle (36) se termine en affleurement avec l'élément chauffant (44) au moins dans certaines zones.

10. Dispositif selon l'une quelconque des revendications précédentes, **caractérisé en ce qu'**au moins un capteur optique permettant de mesurer un passage de la lumière à travers les enveloppes en matière plastique (12) est disposé dans le boîtier (30) à côté de l'élément chauffant (44).

11. Dispositif selon l'une quelconque des revendications précédentes, **caractérisé par** un premier capteur de température destiné à venir en appui contre les enveloppes en matière plastique (12) sur leur côté opposé à l'élément chauffant (44), dans lequel le dispositif de commande ou de régulation est conçu pour déconnecter l'élément chauffant (44) lorsque la température mesurée par le premier capteur de température dépasse une première valeur seuil prédéfinie, dans lequel la première valeur seuil correspond au moins à la température à laquelle les enveloppes en matière plastique (12) fondent au niveau de leur côté intérieur en formant la ligne de scellage (26).

12. Dispositif selon la revendication 11, **caractérisé par** un deuxième capteur de température destiné à venir en appui contre les enveloppes en matière plastique (12) sur leur côté tourné vers l'élément chauffant (44), dans lequel le dispositif de commande ou de régulation est conçu pour déconnecter l'élément chauffant (44) lorsque la température mesurée par le deuxième capteur de température dépasse une deuxième valeur seuil prédéfinie, dans lequel la deuxième valeur seuil est supérieure à la première valeur seuil et dans lequel la deuxième valeur seuil correspond au plus à la température à laquelle les enveloppes en matière plastique (12) fondent sur leur côté extérieur.

13. Dispositif selon l'une quelconque des revendications précédentes, **caractérisé par** un moyen auxiliaire d'introduction (60) permettant d'introduire des documents (24) dans les enveloppes en matière plastique (12), comportant une ou deux pièces de matière plate (62) qui présentent respectivement une rigidité supérieure à celle des documents (24), dans lequel chacune des pièces de matière plate (62) coïncide avec les documents (24), à l'exception d'un évidement (64) ouvert sur un bord.

14. Procédé permettant d'enfermer de manière scellée sous vide un document (24) dans une enveloppe en matière plastique (12) au moyen d'un dispositif (10) de scellage sous vide comportant un boîtier (30) qui présente une partie inférieure (34) et un couvercle (36) détachable de la partie inférieure (34), dans lequel une chambre à vide (38) est disposée entre la partie inférieure (34) et le couvercle (36), et comportant une pompe à vide permettant de faire le vide dans la chambre à vide (38), dans lequel un dispositif de fixation (50) permettant de fixer de manière amovible les enveloppes en matière plastique (12) au niveau du boîtier (30) est disposé sur le boîtier (30), dans lequel le dispositif (10) de scellage sous vide présente un moyen auxiliaire d'introduction (60) permettant d'introduire des documents (24) dans les enveloppes en matière plastique (12), comportant une ou deux pièces de matière plate (62) qui présentent respectivement une rigidité supérieure à celle des documents (24), dans lequel chacune des pièces de matière plate (62) coïncide avec les documents (24), à l'exception d'un évidement (64) ouvert sur un bord, dans lequel l'enveloppe en matière plastique (12) présente deux couches (14, 16) de film en matière plastique transparent, lesquelles sont reliées solidement l'une à l'autre sur trois de leurs quatre côtés (18) et laissent libre une ouverture d'insertion (22) sur le quatrième côté (20), dans lequel le dispositif (10) de scellage sous vide présente un élément chauffant (44) permettant de faire fondre les enveloppes en matière plastique (12) le long d'une ligne de scellage (26) sur le quatrième côté (20), dans lequel le document (24) est appliqué contre une pièce de matière plate (62) ou introduit entre les pièces de matière plate (62) du moyen auxiliaire d'introduction (60), dans lequel la ou les pièces de matière plate (62) est ou sont introduites à travers l'ouverture d'introduction (22) dans l'enveloppe en matière plastique (12) avec le document (24), les évidements (64) ouverts sur un bord étant à l'avant, dans lequel la ou les pièces de matière plate (62) sont retirées de l'enveloppe en matière plastique (12), tandis que le document (24) est maintenu dans la région des évidements (64) ouverts sur un bord, et dans lequel l'enveloppe en matière plastique (12) est fixée au boîtier (30) au moyen du dispositif de fixation (50), puis le vide est fait dans celle-ci et elle est scellée par fusion le long de la ligne de scellage (26).
